# EUROPEAN PATENT APPLICATION

(11) **EP 3 951 775 A1**
(43) Date of publication of application: **09.02.2022**
(21) Application number: 20800774.0
(22) Date of filing: 15.09.2020
(51) Int. Cl.: G10L 15/26, G06F 3/0484, G10L 17/02, H04N 7/15

(54) **METHOD FOR GENERATING SPEAKER-MARKED TEXT**

(30) Priority: 16.06.2020 KR 20200073155
(71) Applicant: MINDS LAB INC., Yuseong-gu, Daejeon 34111 (KR)
(72) Inventor: WON, Jung Sang, Incheon 22753 (KR); KIM, Hee Yeon, Incheon 21384 (KR); LIM, Hee Kwan, Goyang-si Gyeonggi-do 10503 (KR); CHOI, Moo Ni, Seoul 07595 (KR); NAM, Seung Min, Incheon 21353 (KR); YOO, Tae Joon, Incheon 22324 (KR); CHOI, Hong Seop, Seongnam-si Gyeonggi-do 13602 (KR)
(74) Representative: Loyer & Abello
(86) International application number: PCT/KR2020/012416
(87) International publication number: WO 2021/256614

(57) **Abstract**

A method of generating a speaker-labeled text from voice data including voices of at least two speakers includes converting the voice data into text to generate a first text, determining a speaker of each of one or more second texts obtained by dividing the first text in a predetermined unit, and providing an editing interface for displaying the one or more second texts and a speaker of each of the one or more second texts.

## Description

### TECHNICAL FIELD

The present disclosure relates to a method of generating a speaker-labeled text from voice data including the voices of at least two speakers.

### BACKGROUND ART

According to the development of information technology (IT), voice recognition technology has been recently applied in many fields. Voice recognition technology refers to a series of processes in which an information processing device understands human voice and converts it into data that can be processed by the information processing device.

When voice recognition technology is applied to a device that converts human voice into text, voice recognition results are generally provided to a user in the form of text.

However, according to prior arts, because the voices of multiple speakers are all converted to text without being distinguished, the user must separate a series of character strings converted to text in a predetermined unit and input the speakers of the separated unit character strings individually.

### DESCRIPTION OF EMBODIMENTS

### TECHNICAL PROBLEM

The present disclosure is to solve the above-described problem and is intended to generate a speaker-labeled text from voice data including the voices of at least two speakers without user intervention.

In addition, the present disclosure is intended to provide a speaker-labeled text to a user in a form in which the speaker-labeled text may be more conveniently reviewed or corrected by the user.

In addition, the present disclosure is intended to allow a user to easily change a speaker determined by an information processing device.

In addition, the present disclosure is intended to be able to systematically manage text data generated from pieces of voice data.

In addition, the present disclosure is intended to be able to generate text data from not only voice data acquired in real time, but also voice data or image data that has been acquired and stored in advance.

### TECHNICAL SOLUTION TO PROBLEM

According to an aspect of the present disclosure, a method of generating a speaker-labeled text from voice data including voices of at least two speakers includes converting the voice data into text to generate a first text, determining a speaker of each of one or more second texts obtained by dividing the first text in a predetermined unit, and providing an editing interface for displaying the one or more second texts and a speaker of each of the one or more second texts.

The determining of a speaker of each of the one or more second texts may include determining a speaker of each of the one or more second texts based on voice characteristics of voice data corresponding to each of the one or more second texts.

The determining of a speaker of each of the one or more second texts may include determining a speaker of each of the one or more second texts based on the contents of each of the one or more second texts and the contents of a second text preceding or following each of the one or more second texts.

The editing interface may include a speaker name input interface configured to list and display speakers identified in the determining of a speaker and input or select speaker names of the listed speakers, and a text display interface configured to display the one or more second texts corresponding to the speaker names.

The editing interface may further include a voice data information display interface configured to display information on the voice data, wherein the voice data information display interface may include an interface for displaying a title of the voice data, a location where the voice data is acquired, a time when the voice data is acquired, and speaker names of at least two speakers whose voices are included in the voice data, and for correcting or inputting displayed items.

The speaker name input interface may be further configured to provide at least one candidate speaker name for each of the identified speakers and determine a selected candidate speaker name as a speaker name of a speaker corresponding thereto, wherein the at least one candidate speaker name may be at least some of speaker names input to the voice data information display interface.

The text display interface may be further configured to display the one or more second texts corresponding to the speaker names with reference to a speaker name determined in the speaker name input interface and additionally provide one or more candidate speaker names according to a correction input for a speaker name displayed for each of the one or more second texts, wherein the one or more candidate speaker names may be at least some of the speaker names input to the voice data information display interface.

The text display interface may be further configured to list and display the one or more second texts according to a predetermined condition.

The predetermined conditions may be a condition for dividing a display method for the one or more second texts according to a change of a speaker in order to display the one or more second texts, wherein the text display interface may be further configured to list and display one or more second texts according to a passage of time, but display the one or more second texts in different display methods before and after a time point at which a speaker is changed.

The predetermined conditions may be a condition for displaying only a selected speaker-labeled second text from among the one or more second texts, wherein the text display interface may be further configured to list and display the one or more second texts according to a passage of time, but display the selected speaker-labeled second text in a first display method and display the remaining speaker-labeled second texts in a second display method.

The editing interface may include a navigator interface in which a text block map, in which objects corresponding to at least one second text are arranged according to a passage of time, is displayed.

The navigator interface may be configured to, in displaying the text block map, display consecutive second texts of a same speaker as one object and display objects of different speakers in different display formats.

A text, which corresponds to an object selected according to selection of any one of the objects on the text block map, may be displayed on the text display interface that displays the one or more second texts corresponding to the speaker names.

The method of generating a speaker-labeled text from voice data including voices of at least two speakers may further include providing text data including one or more second texts edited on the editing interface.

### ADVANTAGEOUS EFFECTS OF DISCLOSURE

According to the present disclosure, a speaker-labeled text may be generated from voice data including the voices of at least two speakers without user intervention.

In addition, a speaker-labeled text may be provided to a user in a form in which the speaker-labeled text may be more conveniently reviewed or corrected by the user.

In addition, a user may be allowed to easily change a speaker determined by an information processing device.

In addition, text data generated from pieces of voice data may be systematically managed.

In addition, text data may be generated from not only voice data acquired in real time, but also voice data or image data acquired and stored in advance.

### BRIEF DESCRIPTION OF DRAWINGS

FIG. 1 is a schematic view illustrating a configuration of a system for generating a speaker-labeled text, according to an embodiment of the present disclosure;
FIG. 2 is a schematic block diagram illustrating a configuration of a text generating device provided in a server, according to an embodiment of the present disclosure;
FIG. 3 is a view illustrating a screen on which a text management interface is displayed on a user terminal, according to an embodiment of the present disclosure;
FIG. 4 is a view illustrating a screen displayed when a user performs an input on an object "real-time recording" in a menu interface of FIG. 3;
FIG. 5 is a view illustrating a screen on which a text data viewing interface is displayed;
FIG. 6 is a view illustrating a screen on which an editing interface is displayed, according to an embodiment of the present disclosure;
FIG. 7 is a view illustrating a screen on which a navigator interface is displayed, according to an embodiment of the present disclosure; and
FIG. 8 is a flowchart illustrating a method of generating a speaker-labeled text, the method being performed by a controller of a text generating device according to an embodiment of the present invention.

### BEST MODE

A method of generating a speaker-labeled text from voice data including voices of at least two speakers, according to an embodiment of the present disclosure, may include converting the voice data into text to generate a first text, determining a speaker of each of one or more second texts obtained by dividing the first text in a predetermined unit, and providing an editing interface for displaying the one or more second texts and a speaker of each of the one or more second texts.

### MODE OF DISCLOSURE

As embodiments allow for various changes and numerous embodiments, example embodiments will be illustrated in the drawings and described in detail in the written description. Effects and features of the present disclosure, and a method of achieving them will be apparent with reference to the embodiments described below in detail together with the accompanying drawings. The present disclosure may, however, be embodied in many different forms and should not be construed as limited to the example embodiments set forth herein.

Hereinafter, embodiments will be described in detail by explaining example embodiments with reference to the attached drawings. Like reference numerals in the drawings denote like elements, and redundant descriptions thereof are omitted.

In the following embodiments, terms such as "first," and "second," etc., are not used in a limiting meaning, but are used for the purpose of distinguishing one component from another component. In the following embodiments, an expression used in the singular encompasses the expression of the plural, unless it has a clearly different meaning in the context. In the following embodiments, it is to be understood that the terms such as "including," "having," and "comprising" are intended to indicate the existence of the features or components described in the specification, and are not intended to preclude the possibility that one or more other features or components may be added. Sizes of components in the drawings may be exaggerated for convenience of explanation. In other words, since sizes and thicknesses of components in the drawings are arbitrarily illustrated for convenience of explanation, the following embodiments are not limited thereto.

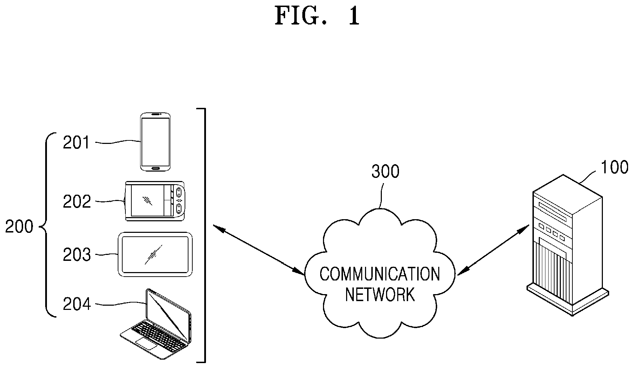

FIG. 1 is a schematic view illustrating a configuration of a system (hereinafter, referred to as a speaker-labeled text generation system) for generating a speaker-labeled text, according to an embodiment of the present disclosure.

The speaker-labeled text generation system according to an embodiment of the present disclosure may generate a speaker-labeled text from voice data including the voices of at least two speakers. For example, the speaker-labeled text generation system according to an embodiment of the present disclosure may generate a speaker-labeled text from voice data acquired in real time, or may generate a speaker-labeled text from image data or voice data provided by a user.

As shown in FIG. 1, the speaker-labeled text generation system may include a server 100, a user terminal 200, and a communication network 300.

In the present disclosure, 'voice data' including the voices of at least two speakers may refer to data in which the voices of at least two speakers are recorded. For example, the voice data may refer to data acquired by recording conferences between multiple speakers, or may refer to data acquired by recording a specific person's speech or presentation.

In the present disclosure, the 'speaker-labeled text' may refer to a text including information on the speaker. For example, when the voice data is data acquired by recording a conversation between two speakers, a speaker-labeled text generated from the voice data may be a text in which the contents of the conversation between the two speakers are written in a time series, and may refer to a text in which information on the speakers is recorded in a predetermined unit.

The user terminal 200 according to an embodiment of the present disclosure may refer to various types of information processing devices that mediate between a user and the server 100 so that various services provided by the server 100 may be used. For example, the user terminal 200 may receive an interface for inputting voice data from the server 100 and provide the received interface to the user, and may acquire the user's input and transmit it to the server 100.

The terminal 200 may refer to, for example, a portable terminal 201, 202, or 203, or a computer 204, as shown in FIG. 1. However, such a form of the terminal 200 is an example, and the spirit of the present disclosure is not limited thereto, and a unit for providing content to the user and accepting the user's input thereto may correspond to the terminal 200 of the present disclosure.

The terminal 200 according to an embodiment of the present disclosure may include a display unit for displaying content or the like in order to perform the above-described functions, and an input unit for acquiring the user's input for the content. In this case, the input unit and the display unit may be configured in various ways. For example, the input unit may include a keyboard, a mouse, a trackball, a microphone, a button, a touch panel, or the like, but is not limited thereto.

In an embodiment of the present disclosure, the number of users may be singular or plural. Accordingly, the number of user terminals 200 may also be singular or plural. In FIG. 1, the number of user terminals 200 is illustrated as one. However, this is for convenience of description, and the spirit of the present disclosure is not limited thereto.

In an embodiment in which voice data is acquired in real time, the number of user terminals 200 may be singular. For example, in a situation where three people attend a conference and have a conversation, a user terminal of a first user may acquire voice data in real time and transmit the acquired voice data to the server 100. The server 100 may generate a speaker-labeled text based on the voice data received from the user terminal of the first user.

In an embodiment in which voice data is acquired in real time, the number of user terminals 200 may be plural. For example, as in the above-described example, in a situation where three people attend a conference and have a conversation, all three user terminals may acquire voice data in real time and transmit the acquired voice data to the server 100. In this case, the server 100 may generate a speaker-labeled text by using the voice data received from three user terminals. In this case, the server 100 may determine the speakers of individual texts by comparing the volumes of the individual speakers' voices in the voice data received from the three user terminals.

The communication network 300 according to an embodiment of the present disclosure may provide a path through which data may be transmitted/received between components of the system. Examples of the communication network 300 may include wired networks such as local area networks (LANs), wide area networks (WANs), metropolitan area networks (MANs), and integrated service digital networks (ISDNs), and wireless networks such as wireless LANs, CDMA, Bluetooth, and satellite communication. However, the scope of the present disclosure is not limited thereto.

The server 100 according to an embodiment of the present disclosure may generate a speaker-labeled text from voice data received from the user terminal 200.

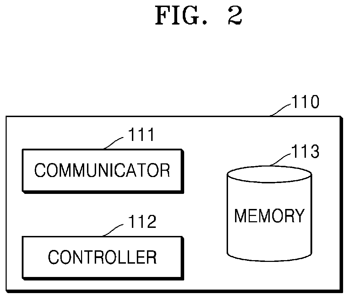

FIG. 2 is a schematic block diagram illustrating a configuration of a text generating device 110 provided in the server 100, according to an embodiment of the present disclosure.

Referring to FIG. 2, the text generating device 110 according to an embodiment of the present disclosure may include a communicator 111, a controller 112, and a memory 113. In addition, although not shown in the drawings, the text generating device 110 according to the present embodiment may further include an input/output unit, a program storage unit, and the like.

The communicator 111 may be a device including hardware and software necessary for the text generating device 110 to transmit and receive a signal such as a control signal or a data signal through a wired or wireless connection with another network device such as the user terminal 200.

The controller 112 may include all types of devices capable of processing data, such as a processor. Here, the 'processor' may refer to a data processing device built in hardware and having a circuit physically structured to perform a function represented by code or a command in a program. Examples of the data processing device built in the hardware may include processing devices such as a microprocessor, a central processing unit (CPU), a processor core, a multiprocessor, an application-specific integrated circuit (ASIC), and a field programmable gate array (FPGA).

However, the scope of the present disclosure is not limited thereto.

The memory 113 temporarily or permanently stores data processed by the text generating device 110. The memory 113 may include a magnetic storage medium or a flash storage medium. However, the scope of the present disclosure is not limited thereto. For example, the memory 113 may temporarily and/or permanently store parameters and/or weights constituting a trained artificial neural network.

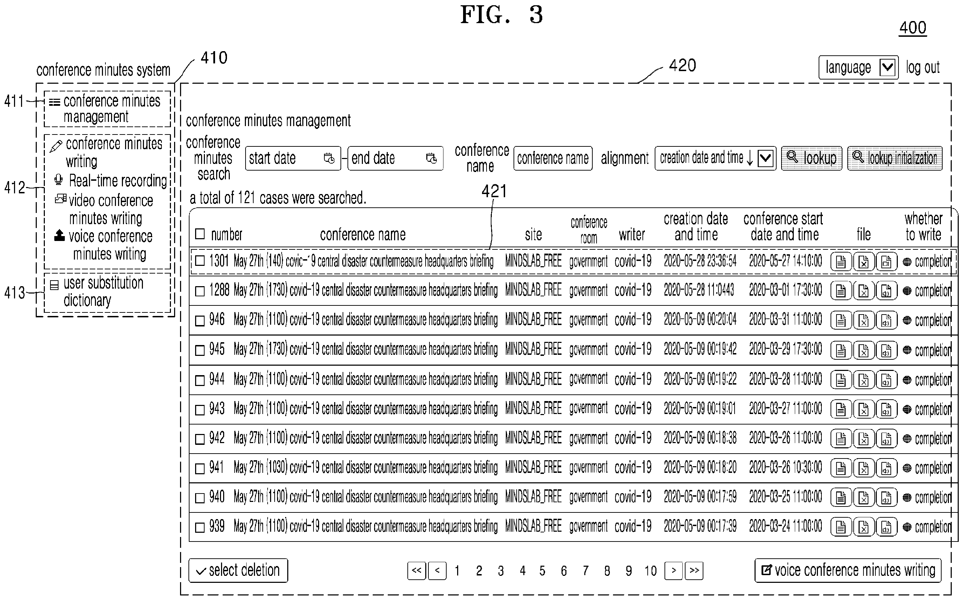

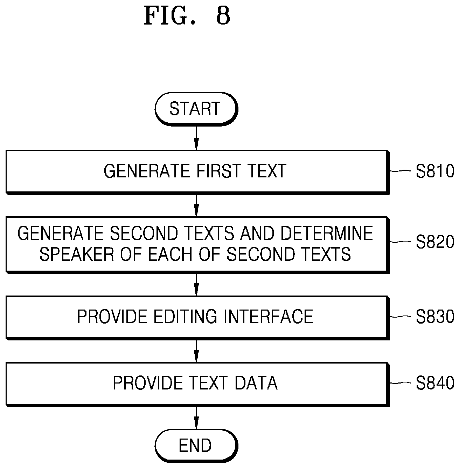

Hereinafter, a method (hereinafter, referred to as a speaker-labeled text generation method) of generating a speaker-labeled text, which is performed by the controller 112 of the text generating device 110, will be described with reference to exemplary screens 400, 500, 600, 700, and 800 shown in FIGS. 3 to 7 and a flowchart shown in FIG. 8 together.

FIG. 3 is a view illustrating a screen 400 on which a text management interface is displayed on the user terminal 200, according to an embodiment of the present disclosure.

Referring to FIG. 3, the text management interface may include a menu interface 410 and a display interface 420 in which detailed items according to a selected menu are provided.

A user may perform an input on an object 411 in the menu interface 410 to display the status of previously generated text data on the display interface 420, as shown in FIG. 3. In this case, as the status of individual text data, a sequence number, the name of text data, the location of voice data generation, a writer, the date and time of writing, whether text data has been written, and an object for download of text data may be included. However, the above-described items are exemplary, and the spirit of the present disclosure is not limited thereto and any item indicating information on text data may be used without limitation as the status of individual text data.

The user may perform an input on an object 412 in the menu interface 410 to allow the controller 112 to generate text data from voice data.

For example, the user may perform an input on an object "real-time recording" to generate text data from voice data acquired in real time.

In addition, the user may perform an input on an object "video conference minutes writing" to generate text data from image data acquired in real time or previously acquired and stored.

The user may also perform an input on an object "voice conference minutes writing" to generate text data from image data acquired in real time or previously acquired and stored.

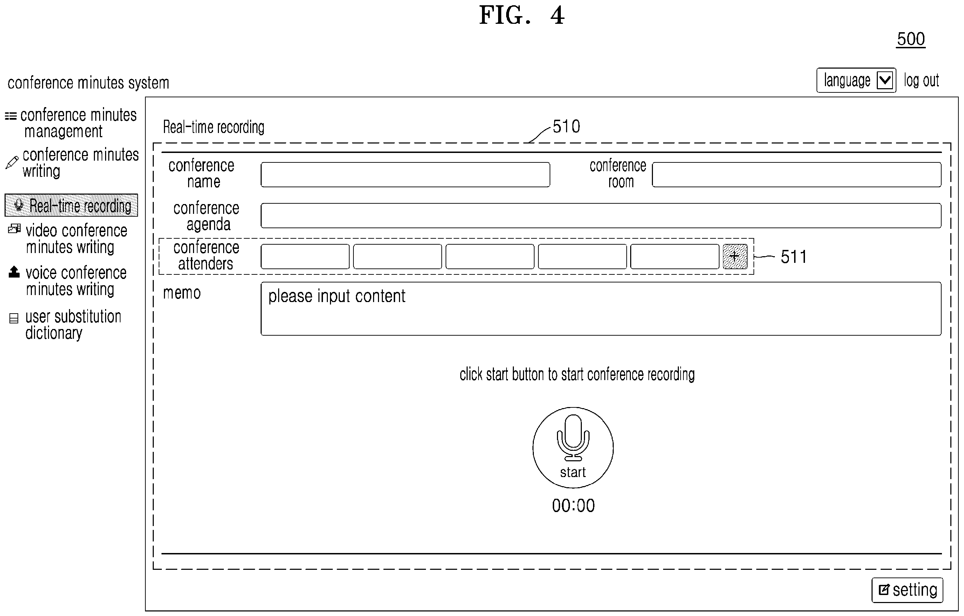

FIG. 4 is a view illustrating a screen 500 displayed when the user performs an input on the object "real-time recording" in the menu interface 410 of FIG. 3.

In response to the user's input to the object "real-time recording", the controller 112 may cause a voice data information acquisition interface 510 to be displayed on the display interface 420 in real time. In this case, the voice data information acquisition interface 510 is for acquiring information on acquired voice, and may include, for example, an interface for inputting each item related to a conference.

The user may input the name of an attender in an interface 511 for inputting the names of conference attenders to allow the controller 112 to use the name of the attender to determine the name of a speaker identified from voice data. A detailed description related to this operation will be described later.

The controller 112 according to an embodiment of the present disclosure may generate a first text by converting voice data into text upon obtaining (or receiving) a text generation request from the user. (S810)

For example, when voice data being recorded in real time is received from the user terminal 200, the controller 112 may generate the first text in real time. In an alternative embodiment, the controller 112 may accumulate and store at least a portion of voice data transmitted in real time, and may generate the first text from the accumulated and stored voice data.

The controller 112 may also receive voice data in the form of an image file or an audio file from the user terminal 200 and generate the first text from the received file.

In an alternative embodiment, the controller 112 may receive pieces of voice data including the same content (i.e., pieces of voice data acquired at different locations in the same time zone in the same space) and may generate the first text by using at least one of the received pieces of voice data.

In an alternative embodiment, in generating the first text, the controller 112 may generate the first text by referring to a user substitution dictionary previously inputted by the user. For example, the user may generate a user substitution dictionary by performing an input on an object "user substitution dictionary" on the menu interface 410 of FIG. 3.

The user may pre-enter a user substitution dictionary for the purpose of matching terms in generating text data. For example, when the user wants to correct all of the texts such as "machine learning", "deep learning", and "machine training" with "artificial intelligence", the user may pre-input the texts to correct each of the texts with "artificial intelligence".

The controller 112 according to an embodiment of the present disclosure may generate one or more second texts from the first text generated in operation S810 and may determine a speaker of each of the generated one or more second texts. (S820)

First, the controller 112 according to an embodiment of the present disclosure may generate one or more second texts from the first text generated in operation S810. For example, the controller 112 may generate the second texts by dividing the first text in a predetermined unit. In this case, the predetermined unit may be, for example, a sentence unit. However, the sentence unit is merely an example, and the spirit of the present disclosure is not limited thereto.

The controller 112 according to an embodiment of the present disclosure may determine a speaker of each of the generated one or more second texts.

For example, the controller 112 may determine a speaker of each of the one or more second texts based on voice characteristics of voice data corresponding to each of the one or more second texts. For example, the controller 112 may determine and extract a voice data section corresponding to a specific second text from the entire voice data, and may determine a speaker of the specific second text by checking the characteristics of voices included in the extracted voice data section.

In an alternative embodiment of the present disclosure, the controller 112 may determine a speaker of the second text by using a trained artificial neural network. In this case, the artificial neural network may be a neural network that has been trained to output speaker identification information of specific section voice data according to the input of the entire voice data and the specific section voice data.

In another alternative embodiment of the present disclosure, the artificial neural network may be a neural network that has been trained to output similarity between each of the sample voices of a plurality of speakers and voice data of a specific section, according to the input of the sample voices of the plurality of speakers and the voice data of the specific section

However, the speaker determination method described above is merely an example, and the spirit of the present disclosure is not limited thereto.

According to another alternative embodiment of the present disclosure, the controller 112 may determine a speaker of each of one or more second texts based on the contents of each of the one or more second texts and the contents of a second text preceding or following each of the one or more second texts.

For example, when a second text preceding a specific second text is "Please, next reporter's question", the controller 112 may determine a speaker of the specific second text as a 'reporter'. However, this method is merely an example, and the spirit of the present disclosure is not limited thereto.

The controller 112 according to another alternative embodiment of the present disclosure may determine a speaker of each of the one or more second texts considering both the voice characteristics of voice data and the contents of the second texts.

When the user selects an item 421 for text data in the status of text data displayed on the display interface 420 of FIG. 3, the controller 112 according to an embodiment of the present disclosure may provide a text data viewing interface that allows selected text data to be checked in more detail.

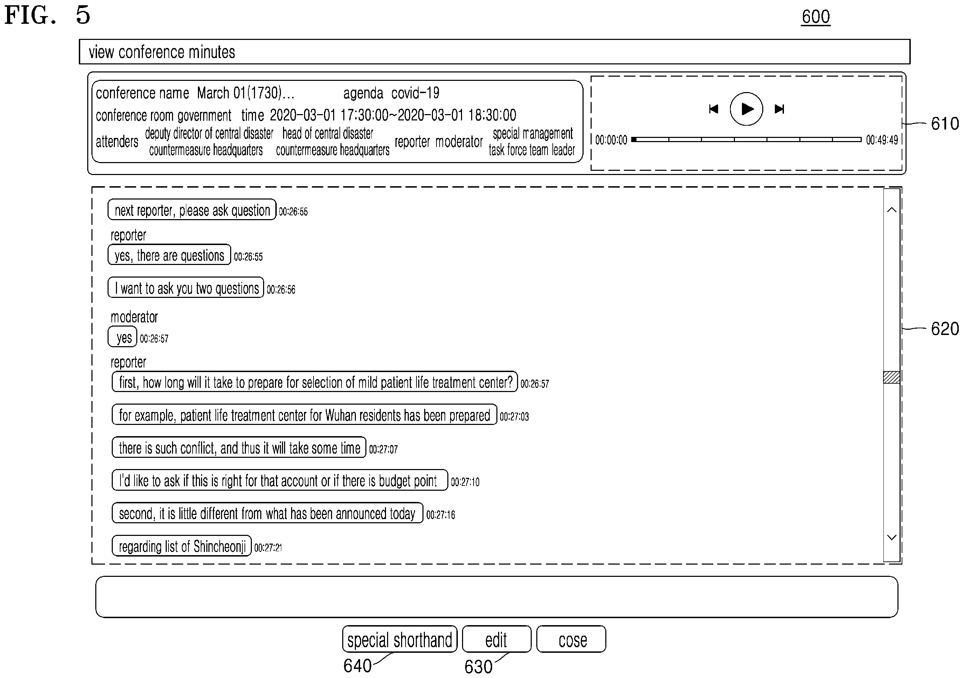

FIG. 5 is a view illustrating a screen 600 on which a text data viewing interface is displayed.

Referring to FIG. 5, the text data viewing interface may include an interface 610 for playing back voice data used for generating text data corresponding thereto, and a text providing interface 620 for displaying one or more second texts and speakers thereof.

In an embodiment of the present disclosure, the controller 112 may update content displayed on the interface 620 according to a user's manipulation of the interface 610. For example, when the user performs an input on a play button in the interface 610, the controller 112 may automatically scroll and display the interface 620 so that a portion corresponding to a currently playing portion in the voice data is displayed on the interface 620.

In an alternative embodiment, the controller 112 may display a second text corresponding to a currently playing portion of the voice data in a different display method than the remaining second texts.

The second texts and speakers corresponding thereto may be displayed on the text providing interface 620. In order to display the second texts corresponding to the speakers, the controller 112 according to an embodiment of the present disclosure may provide an interface for matching a speaker identified from the voice data to a speaker name input by the user. For example, when the user performs an input on an edit button 630, the controller 112 according to an embodiment of the present disclosure may provide an interface for matching a speaker identified from the voice data to a speaker name input by the user.

The controller 112 according to an embodiment of the present disclosure may provide an editing interface that displays one or more second texts generated in operation S820 and speakers thereof. (S830)

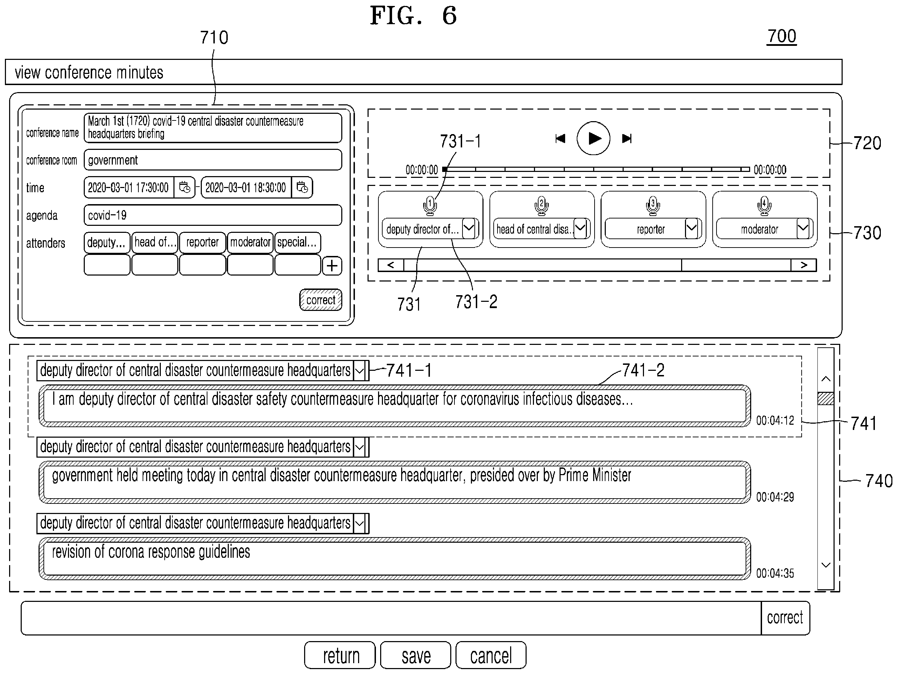

FIG. 6 is a view illustrating a screen 700 on which an editing interface is displayed, according to an embodiment of the present disclosure.

Referring to FIG. 6, the editing interface may include a voice data information display interface 710, an interface 720 for controlling the playback of voice data, a speaker name input interface 730, and a text display interface 740.

The voice data information display interface 710 according to an embodiment of the present disclosure is for displaying information related to voice data. For example, the voice data information display interface 710 may include an interface for displaying the title of voice data, a location where the voice data is acquired, a time when the voice data is acquired, and speaker names of at least two speakers whose voices are included in the voice data, and for correcting or inputting displayed items.

The interface 720 for controlling the playback of voice data, according to an embodiment of the present disclosure, may be for starting the playback of voice data, stopping the playback of voice data, or playing back voice data after moving to a specific location.

The speaker name input interface 730 according to an embodiment of the present disclosure may be an interface for listing and displaying speakers identified from voice data, and inputting or selecting speaker names of the listed speakers.

The text display interface 740 according to an embodiment of the present disclosure may be an interface that displays one or more second texts corresponding to speaker names.

The speaker name input interface 730 according to an embodiment of the present disclosure may provide at least one candidate speaker name for each speaker identified from the voice data, and may determine a candidate speaker name selected by the user as a speaker name of the speaker.

In this case, when a speaker is 'identified' from the voice data, it means that the same voices among a plurality of voices included in the voice data are identified with the same identification code (e.g., "ID_1"), and may not mean that a speaker name has been determined.

For example, when the number of speakers identified from the voice data is 4, the controller 112 according to an embodiment of the present disclosure may display that 4 speakers have been recognized as shown in FIG. 6, and may provide an interface for selecting speaker names for individual speakers.

For example, the controller 112 may display identification information 731-1 of a first speaker on the speaker name input interface 730 and provide a drop-down menu 731-2 for selecting a speaker name. In this case, speaker names provided from the drop-down menu 731-2 may include at least some of the speaker names input to the voice data information display interface 710.

The user may listen to the voice data or refer to the contents of a second text displayed on the text display interface 740 to thereby appropriately select a speaker name of an individual speaker as one of the speaker names provided in the drop-down menu 731-2.

As a speaker name for each speaker is determined in the speaker name input interface 730, the controller 112 according to an embodiment of the present disclosure may display, on the text display interface 740, one or more second texts corresponding to the determined speaker name.

In this case, the controller 112 may provide, in a correctable form, a speaker name displayed for each of the one or more second texts. For example, the controller 112 may provide a speaker name for a second text 741 in the form of a drop-down box 741-1, and thus, the speaker name may be easily changed to one of one or more candidate speaker names according to a user's correction input.

In addition, the controller 112 according to an embodiment of the present disclosure may provide a text editing window 741-2 for the second text 741, and thus, errors in the second text 741 may be quickly corrected.

As described above, the speaker-labeled text generation system according to an embodiment of the present disclosure may automatically generate a speaker-labeled text from voice data including voices of a plurality of speakers, and errors that may occur due to the automatic generation may be easily corrected.

In displaying, on the text display interface 740, one or more second texts corresponding to a determined speaker name, the controller 112 may list and display the one or more second texts according to a predetermined condition.

In this case, the predetermined condition may be, for example, a condition for dividing a display method for the one or more second texts according to a change of a speaker in order to display the one or more second texts. In this case, the controller 112 may list and display one or more second texts according to the passage of time, but may display the one or more second texts in different display methods before and after a time point at which a speaker is changed.

In this case, the 'display method' may be a concept encompassing various items related to display, such as a display size, a display shape, a display position, a display color, and highlights. For example, the controller 112 may change the alignment position of the second text whenever the speaker changes. For example, whenever the speaker changes, the alignment position of the second text may be changed from left alignment to right alignment or vice versa.

The predetermined condition may be a condition for displaying only a selected speaker-labeled second text from among one or more second texts. In this case, the controller 112 may list and display one or more second texts according to the passage of time, but may display the selected speaker-labeled second text in a first display method (e.g., displayed in a first size) and display the remaining speaker-labeled second text in a second display method (e.g., displayed in a second size smaller than the first size).

The controller 112 according to an embodiment of the present disclosure may provide a navigator interface in which a text block map, in which objects corresponding to at least one second text are arranged according to the passage of time, is displayed.

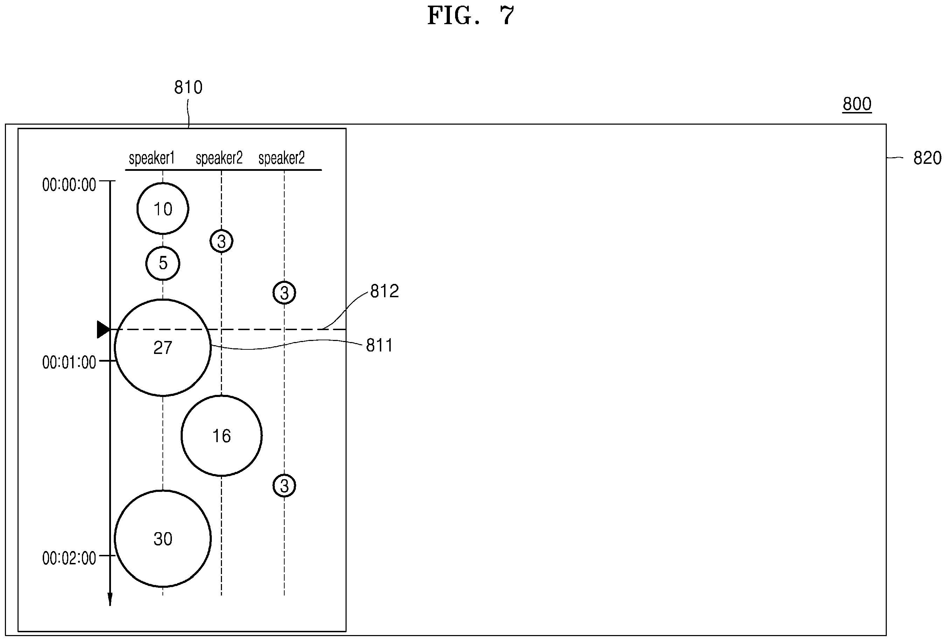

FIG. 7 is a view illustrating a screen 800 on which a navigator interface 810 is displayed, according to an embodiment of the present disclosure.

In an embodiment of the present disclosure, the navigator interface 810 may be provided in a pop-up window or overlay format on various screens. For example, in an area 820, the interfaces 710, 720, 730, and 740 shown in FIG. 6 may be displayed and the navigator interface 810 may be provided in an overlay format according to a scroll input to the interface 740.

Objects displayed on the navigator interface 810 may be objects corresponding to one or more second texts. For example, an object 811 may be an object corresponding to 27 consecutive second texts for speaker 1.

As described above, in displaying the text block map on the navigator interface 810, the controller 112 according to an embodiment of the present disclosure may display consecutive second texts of the same speaker as one object and display objects of different speakers in different display formats.

In addition, the controller 112 according to an embodiment of the present disclosure may display one or more second texts, which correspond to a selected object, and a speaker name together on the text display interface 740 according to the selection of any one of the objects on the text block map.

In an alternative embodiment, when displaying an object on the navigator interface 810, the controller 112 may adjust the size of the object in proportion to the number of second texts corresponding to each object. In other words, the controller 112 may display an object larger as the object corresponds to a larger number of second texts.

In another alternative embodiment, the controller 112 may display a portion displayed on the text display interface 740 as an indicator 812 on the navigator interface 810.

Accordingly, in the present disclosure, the user may easily review a generated second text, and in particular, the convenience of review may be improved by allowing the user to review the second text in block units.

The controller 112 according to an embodiment of the present disclosure may provide the user with text data including one or more second texts edited on the editing interface provided in operation S830.(S840)

For example, the controller 112 may provide text data in the same format as the interface 620 illustrated in FIG. 5, or may provide text data according to a text data file download request in FIG. 3. However, these methods are merely examples, and the spirit of the present disclosure is not limited thereto.

The controller 112 according to an embodiment of the present disclosure may provide an interface (or button) 640 (see FIG. 5) for transmitting the generated text data to a third service. For example, the user may proceed with a notarization procedure for the generated text data by performing an input on the interface 640 or may share the generated text data with a third party.

The embodiments described above may be embodied in the form of a computer program executable through various components in a computer, and the computer program may be recorded in a computer-readable recording medium. In this case, the computer-readable recording medium may store programs executable by a computer. Examples of the computer-readable recording medium include a magnetic medium such as a hard disc, a floppy disk and magnetic tape, an optical recording medium such as a compact disc (CD)-read-only memory (ROM) and a digital versatile disk (DVD), a magneto-optical medium such as a floptical disk, ROM, random access memory (RAM), flash memory, and the like, and may be configured to store program instructions.

The programs executable by a computer may be specially designed and configured for embodiments or may be well-known and available by those of ordinary skill in the field of computer software. Examples of the programs include not only machine code created by a compiler but also high-level language code executable by a computer using an interpreter or the like.

The embodiments described herein are only examples and thus the scope of the disclosure is not limited thereby in any way. For brevity of the specification, a description of existing electronic configurations, control systems, software, and other functional aspects of the systems may be omitted. Lines or members connecting components illustrated in the drawings are illustrative of functional connections and/or physical or circuit connections between the components and thus are replaceable or various functional, physical or circuit connections may be added in an actual device. Unless a component is specifically stated with an expression "essential", "important", or the like, the component may not be an essential component for application of embodiments.

Therefore, the scope of the disclosure should not be construed as being limited to the above-described embodiments, and the scope of all embodiments equivalent to the scope of the claims described below or equivalently changed from the claims are within the scope of the disclosure.

## Claims

1. A method of generating a speaker-labeled text from voice data including voices of at least two speakers, the method comprising:
converting the voice data into text to generate a first text;
determining a speaker of each of one or more second texts obtained by dividing the first text in a predetermined unit; and
providing an editing interface for displaying the one or more second texts and a speaker of each of the one or more second texts.

2. The method of claim 1, wherein the editing interface includes
a speaker name input interface configured to list and display speakers identified in the determining of a speaker and input or select speaker names of the listed speakers; and
a text display interface configured to display the one or more second texts corresponding to the speaker names.

3. The method of claim 2, wherein the editing interface further includes a voice data information display interface configured to display information on the voice data,
wherein the voice data information display interface includes
an interface for displaying a title of the voice data, a location where the voice data is acquired, a time when the voice data is acquired, and speaker names of at least two speakers whose voices are included in the voice data, and for correcting or inputting displayed items.

4. The method of claim 3, wherein the speaker name input interface is further configured to provide at least one candidate speaker name for each of the identified speakers and determine a selected candidate speaker name as a speaker name of a speaker corresponding thereto,
wherein the at least one candidate speaker name is at least some of speaker names input to the voice data information display interface.

5. The method of claim 4, wherein the text display interface is further configured to display the one or more second texts corresponding to the speaker names with reference to a speaker name determined in the speaker name input interface and additionally provide one or more candidate speaker names according to a correction input for a speaker name displayed for each of the one or more second texts,
wherein the one or more candidate speaker names are at least some of the speaker names input to the voice data information display interface.

6. The method of claim 2, wherein the text display interface is further configured to list and display the one or more second texts according to a predetermined condition.

7. The method of claim 6, wherein the predetermined condition is a condition for dividing a display method for the one or more second texts according to a change of a speaker in order to display the one or more second texts,
wherein the text display interface is further configured to list and display one or more second texts according to a passage of time, but display the one or more second texts in different display methods before and after a time point at which a speaker is changed.

8. The method of claim 6, wherein the predetermined condition is a condition for displaying only a selected speaker-labeled second text from among the one or more second texts,
wherein the text display interface is further configured to list and display the one or more second texts according to a passage of time, but display the selected speaker-labeled second text in a first display method and display the remaining speaker-labeled second text in a second display method.

9. The method of claim 1, wherein the editing interface includes a navigator interface in which a text block map, in which objects corresponding to at least one second text are arranged according to a passage of time, is displayed.

10. The method of claim 9, wherein the navigator interface is configured to, in displaying the text block map, display consecutive second texts of a same speaker as one object and display objects of different speakers in different display formats.

11. The method of claim 9, wherein a text, which corresponds to an object selected according to selection of any one of the objects on the text block map, is displayed on a text display interface that displays the one or more second texts corresponding to the speaker names.
